# EUROPÄISCHE PATENTANMELDUNG

(11) **EP 3 029 393 A1**
(43) Veröffentlichungstag der Anmeldung: **08.06.2016**
(21) Anmeldenummer: 15197414.4
(22) Anmeldetag: 02.12.2015
(51) Int. Cl.: F24H 9/00, F23L 15/04, F24B 5/02, F23G 7/10

(54) **HEIZANLAGE FÜR DEN BETRIEB IM FREIEN**

(30) Priorität: 02.12.2014 DE 102014117654
(71) Anmelder: CB Bioenergy GmbH, 5600 St. Johann im Pongau (AT)
(72) Erfinder: Preis, Peter, 5020 Salzburg (AT)
(74) Vertreter: Patronus IP Patent- und Rechtsanwälte

(57) **Zusammenfassung**

Die vorliegende Erfindung betrifft eine Heizanlage für den Betrieb im Freien mit einer kombinierten Brennkammer zum Verbrennen von Pellets und/oder Holz, einem Anzünder zum Befeuern der Pellets und/oder des Holzes, einem kommunizierend mit der Brennkammer verbundenen Kamin zum Abführen der bei der Verbrennung erzeugten Abgase, einem Pellettank und/oder einem Holzdepot zur Lagerung der Pellets und/oder des Holzes und einer Lufteinleiteinrichtung zum Einleiten von Frischluft in die Brennkammer.

Die Heizanlage zeichnet sich dadurch aus, dass ein thermisch an die Brennkammer gekoppelter Lüftungsschacht mit der Lufteinleiteinrichtung verbunden ist, sodass vorgewärmte Frischluft in die Brennkammer eingeleitet wird, wobei ein Teil (20) des Lüftungsschachts an einer Oberseite (19) der Brennkammer (4) vorgesehen ist, und dass ein Gehäuse (28) vorgesehen ist, das die Brennkammer (4) umschließt, wobei zwischen der Brennkammer (4) und dem Gehäuse (28) ein Zwischenraum ausgebildet ist. Der Lüftungsschacht mündet in diesen Zwischenraum, sodass die im Zwischenraum befindliche Luft vom Lüftungsschacht angesaugt wird.

## Beschreibung

Die Erfindung betrifft eine Heizanlage für den Betrieb im Freien.

Heizanlagen werden Brennwertheizungen genannt, wenn sie den Energieinhalt des eingesetzten Brennstoffs nahezu vollständig nutzen. Die Brennwertkessel, die in Brennwertheizungen verwendet werden, ermöglichen es, die Abgase soweit abzukühlen, dass die Kondensationswärme des im Abgas enthaltenen Wasserdampfes zur Wärmebereitstellung genutzt werden kann. Auf diese Weise können fossile Brennstoffe und somit auch Energie beim Heizen eingespart werden. Bisher ist es lediglich bekannt, Brennwertheizungen im Inneren von Gebäuden einzubauen, wie beispielsweise üblicherweise im Keller eines Gebäudes. Dieser Einbau kann sich als sehr komplex herausstellen und erhebliche Kosten mit sich bringen, soll ein Gebäude nachträglich mit einer Brennwertheizung ausgestattet werden. Bei Umstellung auf eine Brennwertheizung ist eine Kaminsanierung notwenig, um den Kamin an die geänderten Anforderungen anzupassen. Zudem fallen brandschutztechnische Umbauten an und es wird erheblich Platz für die Lagerung des Brennstoffes, wie beispielsweise Holz, Pellets, Gas oder Öl, im Gebäude benötigt.

Der Erfindung liegt die Aufgabe zugrunde, eine Heizanlage der bisher bekannten Art derart weiterzubilden, dass eine Heizanlage zur Verfügung gestellt wird, welche mittels einer Ansaugung von Frischluft und einer Kühlung des Kamins derart aufgebaut ist, sodass die Heizanlage im Freien betrieben werden kann, was die Komplexität eines nachträglichen Einbaus erleichtert, Platz in dem entsprechenden Gebäude und Kosten beim Umbau einspart.

Diese Aufgabe wird durch eine Heizanlage für den Betrieb im Freien gemäß den unabhängigen Ansprüchen gelöst.

Vorteilhafte Weiterbildungen sind Gegenstand der Unteransprüche.

Die erfindungsgemäße Heizanlage für den Betrieb im Freien weist eine kombinierte Brennkammer, einen Anzünder, einen Kamin, einen Pellettank und/oder ein Holzdepot und eine Lufteinleiteinrichtung auf. Die Brennkammer ist ausgebildet, um Pellets und/oder Holz als Brennstoff zu verbrennen. Der Pellettank und/oder das Holzdepot sind für die Lagerung der Pellets und/oder des Holzes vorgesehen und stellen die für die Verbrennung benötigten Pellets und/oder das Holz bereit. Der Anzünder dient der Befeuerung der Pellets und/oder des Holzes. Ein Kamin, der kommunizierend mit der Brennkammer verbunden ist, führt die bei der Verbrennung erzeugten Abgase ab. Die Lufteinleiteinrichtung führt der Brennkammer die für die Verbrennung benötigte Frischluft zu.

Die Erfindung zeichnet sich insbesondere dadurch aus, dass ein thermisch an die Brennkammer gekoppelter Lüftungsschacht mit der Lufteinleiteinrichtung verbunden ist, sodass vorgewärmte Frischluft in die Brennkammer eingeleitet wird. Die Brennkammer strahlt während des Verbrennungsvorgangs in der Brennkammer Wärme an ihre Umgebung ab. So wird die Frischluft außerhalb der Brennkammer erwärmt. Diese Wärme wird auch an den thermisch an die Brennkammer gekoppelten Lüftungsschacht abgegeben. Die außerhalb der Brennkammer bereits erwärmte Frischluft wird aufgrund dieser abgegebenen Wärme in den Lüftungsschacht angesaugt und aufgrund der in dem Lüftungsschacht vorherrschenden Wärme noch heißer. Anschließend wird die heiße Frischluft über die Lufteinleiteinrichtung in die Brennkammer eingeleitet. Aufgrund dieser eingeleiteten und bereits vorgewärmten Frischluft benötigt die Brennkammer weniger Energie für die Verbrennung. Zudem kann Brennstoff eingespart werden.

Dabei ist ein Teil des Lüftungsschachts an einer Oberseite der Brennkammer vorgesehen. Der Teil des Lüftungsschachts ist vorzugsweise als ein flacher Lüftungsschacht ausgebildet, der an der Oberseite der Brennkammer verläuft. Die Wärme, die von der Brennkammer an ihrer Oberseite abgestrahlt wird, gelangt so direkt in den Lüftungsschacht. Die Luft außerhalb der Brennkammer, die von der abgestrahlten Wärme der Brennkammer erwärmt wird, wird durch über die Lufteinleiteinrichtung direkt angesaugt und so daran gehindert, in einen Bereich oberhalb der Brennkammer zu steigen, sondern der Brennkammer zugeführt.

Zudem ist ein Gehäuse vorgesehen, das die Brennkammer umschließt. Das Gehäuse schützt die Brennkammer und die damit verbundenen Einrichtungen vor den Umwelteinflüssen, um eine Anordnung der Heizanlage im Freien ermöglichen zu können. Ein Zwischenraum ist zwischen der Brennkammer und dem Gehäuse ausgebildet. In diesem Zwischenraum befindet sich Frischluft. Während der Verbrennung wird diese Frischluft von der Wärmestrahlung der Brennkammer erwärmt. Der Lüftungsschacht mündet in den Zwischenraum zwischen Gehäuse und Brennkammer, sodass die im Zwischenraum befindliche vorgewärmte Luft vom Lüftungsschacht angesaugt wird. Durch das Ansaugen der vorgewärmten Frischluft wird das Gehäuse abgekühlt, da von außerhalb des Gehäuses kühlere Frischluft in das Gehäuse eindringen kann. Somit ist die Frischluft in dem Gehäuse kontinuierlich in Bewegung. So wird der Zwischenraum zwischen der Brennkammer und dem Gehäuse nicht übermäßig erhitzt. Dementsprechend kann ein Wärmeverlust nach außen gering gehalten werden.

Mit der erfindungsgemäßen Wärmerückführung kann die Verbrennung einer Heizanlage verbessert werden. Zudem kann daher eine Erhöhung des Wirkungsgrads einer erfindungsgemäßen Heizanlage gewährleistet werden. Durch die Anordnung und den Betrieb der Heizanlage im Freien ist es weiterhin möglich, die Pellets und das Holz im Freien zu lagern, was in dem Gebäude erheblich Platz einspart. Der beim Nachlegen von Pellets und/oder Holz und deren anschließender Verbrennung auftretende Schmutz und Staub sowie die bei der Verbrennung entstehenden Gase bleiben so auch im Freien und können in dem Gebäude vermieden werden.

Vorteilhafterweise weist die Lufteinleiteinrichtung ein Gebläse zum Einleiten der vorgewärmten Frischluft in die Brennkammer auf. Die vorgewärmte Luft wird von dem Gebläse der Lufteinleiteinrichtung aus dem Lüftungsschacht über die Lufteinleiteinrichtung in die Brennkammer befördert. Die bei der Verbrennung in der Brennkammer entstehende Wärme wird dieser als Energie wieder zugeführt. Die für die Verbrennung benötigte Energie und somit auch Brennstoff in Form von Pellets und/oder Holz kann auf diese Weise eingespart werden. Die Einsparung von Brennstoff wirkt sich zudem positiv auf die Umwelt aus. Weiterhin kann eine Verbesserung der Verbrennung gewährleistet werden, was zudem den Wirkungsgrad der Heizanlage erhöht.

Bei einer vorteilhaften Weiterbildung mündet der Lüftungsschacht mit einem Einlass zum Ansaugen von Luft oberhalb der Brennkammer. Der Einlass zum Ansaugen von Luft ist mit der Lufteinleiteinrichtung verbunden, über die die angesaugte, vorgewärmte Frischluft in die Brennkammer eingeleitet wird.

Bei einer vorteilhaften Weiterbildung sind in einem unteren Bereich des Gehäuses Öffnungen vorgesehen. Zudem ist das Gehäuse oberhalb dieser Öffnungen im Wesentlichen dicht. Kühle Frischluft von außerhalb des Gehäuses kann durch die Öffnungen in sein Inneres dringen. Die von der Wärmestrahlung der Brennkammer erwärmte Luft kann nicht aus dem Gehäuse entweichen und so keine Wärmeenergie verloren gehen, da das Gehäuse von den Öffnungen nach oben hin dicht ist. Der die Öffnungen aufweisende Bereich ist vorzugsweise benachbart zu einer Vorderseite einer Aschenlade der Brennkammer angeordnet, sodass die von außerhalb des Gehäuses angesaugte Luft zunächst entlang der Aschenlade und an der Brennkammer nach oben strömt. So wird die durch die Öffnungen in das Gehäuse eindringende Frischluft auf dem Weg nach oben vorgewärmt, um von dem Lüftungsschacht vorgewärmt angesaugt werden zu können.

In einer bevorzugten Ausführungsform weist der Lüftungsschacht einen mit dem Kamin thermisch gekoppelten Abschnitt auf. Die vorgewärmte Frischluft wird in den Lüftungsschacht angesaugt. Diese vorgewärmte Luft ist dennoch kühler als die heißen Abgase, die über den Kamin aus der Brennkammer austreten können. Dabei führt der thermisch mit dem Kamin gekoppelte Abschnitt des Lüftungsschachts an dem Kamin vorbei, sodass die angesaugte Frischluft den Kamin abkühlt und erwärmt in den Lüftungsschacht gelangt. Vorteilhafterweise ist der thermisch mit dem Kamin gekoppelte Abschnitt des Lüftungsschachts zumindest als ein Rohr und/oder als eine Manschette ausgebildet. Das Rohr und/oder die Manschette ist um den Kamin herum oder durch den Kamin zu dem Brenner geführt. Die Luft wird bei bestimmungsgemäßem Gebrauch über ein Rohr des Lüftungsschachts und über die Manschette, die um den Kamin herum angeordnet ist, in den Teil des Lüftungsschachts oberhalb der Brennkammer angesaugt. Die angesaugte Frischluft, die durch die Manschette hindurch strömt, hat eine kühlende Wirkung auf den Kamin und transportiert die Wärme der Abgase zusätzlich in den oberhalb der Brennkammer angeordneten Teil des Lüftungsschachts. Die Frischluft, die in den Lüftungsschacht gelangt, wird dadurch noch heißer, bevor sie über die Lufteinleiteinrichtung der Brennkammer zugeführt wird. Weiterhin bewirkt die Abkühlung des Kamins eine bessere Zugwirkung des Kamins. Die Abgase können demnach besser abtransportiert werden. Ein Betrieb der Heizanlage im Freien, insbesondere bei einer Anordnung mit dem Kamin an der Südseite, in südlichen Gebieten oder in Föhngebieten, kann zudem ermöglicht werden.

Die Zugwirkung des Kamins kann erheblich gesteigert werden, da die angesaugte, am Kamin vorbeigeleitete Frischluft auf den Kamin eine abkühlende Wirkung von in etwa 20°C bis 25°C hat. So kann eine Steigerung der Zugwirkung von in etwa 4 Pa bei einem Durchmesser des Kamins von beispielsweise 100 mm bis 200 mm, vorzugsweise von 130 mm bis 160 mm, erzielt werden. Die erfindungsgemäße Heizanlage kann aufgrund dieser verbesserten Zugwirkung auch ohne ein Gebläse auskommen. Diese Funktionsweise ist auch auf andere Heizsysteme, wie z.B. Heizsysteme, die mit Öl, Scheitholz, Hackgut, Kohle heizen, übertragbar. Wenn eine entsprechende Kühlung vorgesehen ist, kann insbesondere der Innendurchmesser des Kamins klein dimensioniert werden.

Vorteilhafterweise ist ein Teller vorgesehen, auf welchem die zu verbrennenden Pellets angeordnet werden können. Die auf dem Teller angeordneten Pellets werden von dem Anzünder angezündet. Der Teller weist zumindest einen mit dem Kreislauf für den Wärmeträger gekoppelten Kanal auf, sodass der Teller durch den Wärmeträger gekühlt wird. Bevor der Wärmeträger in der Brennkammer erhitzt wird, wird der Wärmeträger an dem Teller vorbeigeleitet. Während die Pellets auf dem Teller brennen, kühlt der in dem Kanal befindliche Wärmeträger so den Teller. Ein Teil der Wärme, die bei dem Brennen der Pellets entsteht, wird demnach nicht schon über den Teller abgeführt. Eine übermäßige Entwicklung von Staub während des Brennvorgangs kann aufgrund der Kühlung des Tellers vermieden werden.

In einer bevorzugten Ausführungsform ist ein Rost vorgesehen, auf welchem das zu verbrennende Holz angeordnet ist. Vorzugsweise wird das Holz entweder von den vom Anzünder entzündeten Pellets oder von dem Anzünder selbst entzündet. Der Verbrennungsvorgang in der Brennkammer ist nicht auf die Verwendung eines bestimmten Brennstoffs eingeschränkt. Er kann entweder mit Pellets, mit Holz, Briketts, Miscanthus, Elefantengras oder mit Pellets und Holz stattfinden. Die Verbrennung kann mit dem entsprechend anderen Brennstoff durchgeführt werden, sollte ein Brennstoff für die Heizanlage knapp werden. Die Pellets und das Holz als Brennstoffe stehen direkt bei der Brennkammer zur Verfügung stehen, da der Pellettank und das Holzdepot beide in der Heizanlage angeordnet sind.

Vorteilhafterweise ist ein Wärmetauscher vorgesehen. Der Wärmetauscher ist an einen Kreislauf mit einem flüssigen Wärmeträger gekoppelt. Vorzugsweise ist der flüssige Wärmeträger Wasser. Mit der bei der Verbrennung in der Brennkammer entstehenden Wärme wird dieses Wasser erhitzt. Um ein Gebäude zu heizen, wird das erhitzte Wasser über Leitungen zu dem Gebäude geleitet.

Bei einer vorteilhaften Weiterbildung ist der Wärmeträger ein Gemisch aus Wasser und Frostschutzmittel. Das Wasser sollte in den Wintermonaten am Gefrieren gehindert werden, da die Heizanlage und die Leitungen, die den erhitzten Wärmeträger zu dem zu beheizenden Gebäude transportieren, im Freien angeordnet sind. Es ist daher vorteilhaft, das Wasser mit Frostschutzmittel zu vermischen. Vorteilhafterweise ist ein Katalysator zum Reinigen des Abgases vorgesehen. Bei bestimmungsgemäßem Gebrauch ist der Katalysator nicht geregelt. Aufgrund des gekühlten Tellers und des geringeren Staubaufkommens ist kein mit einer Lambda-Sonde geregelter Katalysator notwendig. Die Elektronik in der Heizanlage kann so eingeschränkt werden. Daher können eventuell anfallende Wartungsarbeiten von dem Besitzer selbst durchgeführt werden. Das Beauftragen eines auf die Heizanlage spezialisierten Technikers mit der Wartung ist somit nicht notwendig.

Nach einem weiteren Aspekt der Erfindung weist eine Heizanlage eine kombinierte Brennkammer zum Verbrennen von Pellets und/oder Holz, einen mit der Brennkammer gekoppelten Wärmetauscher und einen geschlossenen Wärmekreislauf auf, in dem ein flüssiger Wärmeträger geführt werden kann. Der Kreislauf ist aus Leitungen zum Führen des Wärmeträgers mit einem Druck von zumindest 1,8 bar bis 3,0 bar ausgebildet. Um zu ermöglichen, dass der Wärmeträger in dem zu beheizenden Gebäude ein Höhenunterschied von einigen Metern, vorzugsweise zumindest drei Meter, überwinden kann wird der Wärmeträger mit einem Druck beaufschlagt. So kann erreicht werden, dass auch höhere Stockwerke beheizt werden können und nicht nur das Stockwerk, das sich auf derselben Ebene befindet wie die Heizanlage.

Bei einer vorteilhaften Weiterbildung ist ein Manometer zum Feststellen eines Drucks des Wärmeträgers vorgesehen. Eine Druckeinrichtung ist zum Beaufschlagen des Wärmeträgers mit einem Druck vorgesehen, sollte der Druck in dem Wärmeträger zu niedrig sein. Um den Wärmeträger unter Druck zu setzen, weist die Druckeinrichtung vorteilhafterweise zumindest eine Pumpe auf. Die Pumpe setzt den Wärmeträger solange unter Druck, bis der notwendige Druck erreicht ist, wenn der mit dem Manometer festgestellte Druck in dem Wärmeträger niedriger als 1,8 bar ist.

Bei einer vorteilhaften Weiterbildung weist die Heizanlage ein Überdruckventil auf. Um Schäden an der Heizanlage zu verhindern, ist das Überdruckventil vorteilhafterweise derart ausgebildet, dass es bei einem Schwellenwert von 1,8 bar bis 3,0 bar öffnet. Ein Überschreiten des Drucks in dem Wärmeträger findet dann statt, wenn sich der Wärmeträger übermäßig erhitzt und ausdehnt, weil beispielsweise kein Abnehmer für die mit dem Wärmeträger transportierte Wärme vorhanden ist. Dies ist beispielsweise dann der Fall, wenn die Heizung in dem Gebäude ausgeschaltet ist. Um den Wärmeträger aufzunehmen, ist vorzugsweise benachbart zu dem Überdruckventil ein Überlauftank angeordnet. Der Überlauftank hat beispielsweise ein Fassungsvermögen von in etwa 25 Liter bis 35 Liter. Eine thermische Ablaufsicherung regiert und kaltes Wasser fließt in den geschlossenen Kreislauf des Wärmeträgers nach, wenn sich das Wasser ausdehnt, weil es aufgrund eines fehlenden Abnehmers zu heiß wird und beispielsweise 110°C überschreitet. Anschließend fließt das überschüssige Wasser in den Überlauftank. Ab einem Druck von vorzugsweise beispielsweise 2,5 bar öffnet sich das Überdruckventil, sollte dieses Abfließen in den Überlauftank hinsichtlich einer Druckabsenkung des Wärmeträgers nicht ausreichen. Der Druck in dem Wärmeträger wird derart weiter abgesenkt. In den aus dem Stand der Technik bekannten drucklosen Brennwertheizanlagen fließt der Wärmeträger üblicherweise in die Umgebung ab. Das Abfließen in die Umgebung bei Überdruck wirkt sich negativ auf die Umwelt aus, ist der erfindungsgemäße Wärmeträger ein Gemisch aus Wasser und Frostschutzmittel. Dies kann mit einem Überlauftank vermieden werden.

Vorteilhafterweise kann an den geschlossenen Kreislauf des Wärmeträgers zumindest ein Wärmetauscher in einem Gebäude gekoppelt werden. Der erhitzte Wärmeträger wird zu dem Gebäude geleitet und gibt die bei der Verbrennung aufgenommene Wärme bei dem Wärmetauscher an das Wasser einer Heizung ab. Das Gebäude wird beheizt. Es ist möglich, den Wärmetauscher in dem Gebäude in einem höheren Stockwerk anzuordnen, da der Wärmeträger mit einem Druck beaufschlagt ist. Dieser Druck in dem Wärmeträger ermöglicht es, eine Höhe von zumindest drei Metern zu überwinden.

Um jeweils einem Verbraucher Wärme zuzuführen, sind bei einer vorteilhaften Weiterbildung an den Wärmekreislauf mehrere Wärmetauscher gekoppelt. Ein Verteilungskreislauf, der die einmal zu dem Gebäude transportierte Wärme an verschiedene Parteien in einem Gebäude, insbesondere in einem Wohn- oder Bürogebäude, verteilt, ist demnach nicht notwendig. Jede Partei kann als separater Abnehmer mit einem entsprechenden eigenen Wärmetauscher direkt den erhitzen Wärmeträger von der Heizanlage empfangen. Zwei Wohnungen mit einem Bedarf von 20 kW und 25 kW versorgen können beispielsweise von einer Heizanlage mit einer Leistung von 45 kW versorgt werden.

Die Erfindung wird nachfolgend anhand von acht Zeichnungen beispielhaft dargestellt und erläutert. Hierbei zeigen:
- **Fig. 1:**: die erfindungsgemäße Heizanlage ohne Lüftungsschacht und ohne Verkleidung;
- **Fig. 2:**: die erfindungsgemäße Heizanlage ohne Lüftungsschacht und ohne Verkleidung aus einer weiteren Perspektive;
- **Fig. 3:**: einen Ausschnitt einer erfindungsgemäßen Heizanlage;
- **Fig. 4:**: den Ausschnitt der erfindungsgemäßen Heizanlage aus einer weiteren Perspektive;
- **Fig. 5:**: den Ausschnitt der erfindungsgemäßen Heizanlage aus einer weiteren Perspektive;
- **Fig. 6:**: den Ausschnitt der erfindungsgemäßen Heizanlage in einer Seitenansicht;
- **Fig. 7:**: die erfindungsgemäße Heizanlage teilweise mit Verkleidung; und
- **Fig. 8:**: die erfindungsgemäße Heizanlage vollständig verkleidet.

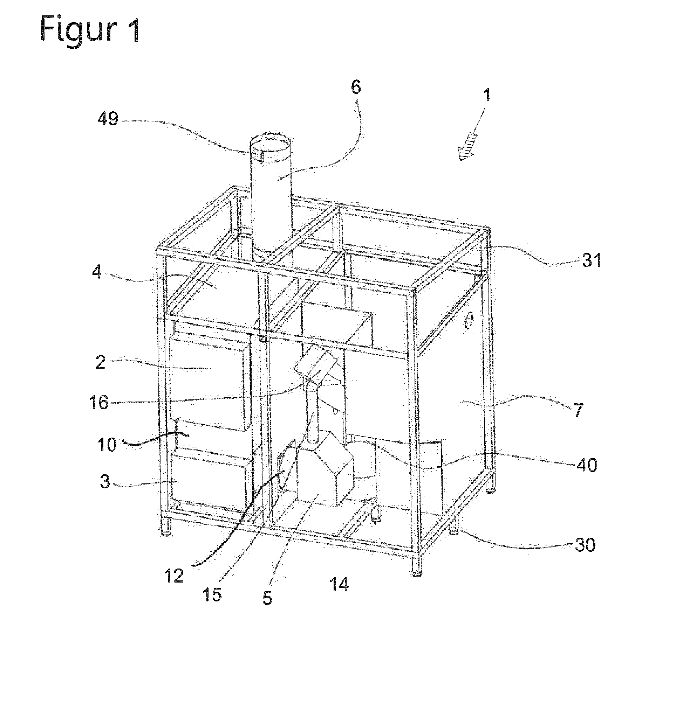

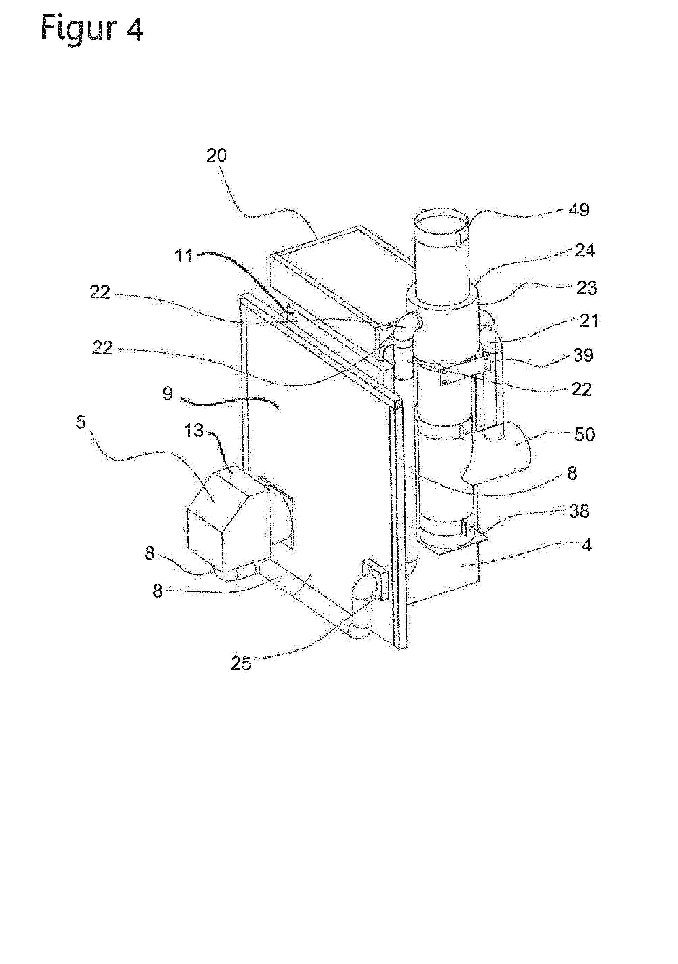

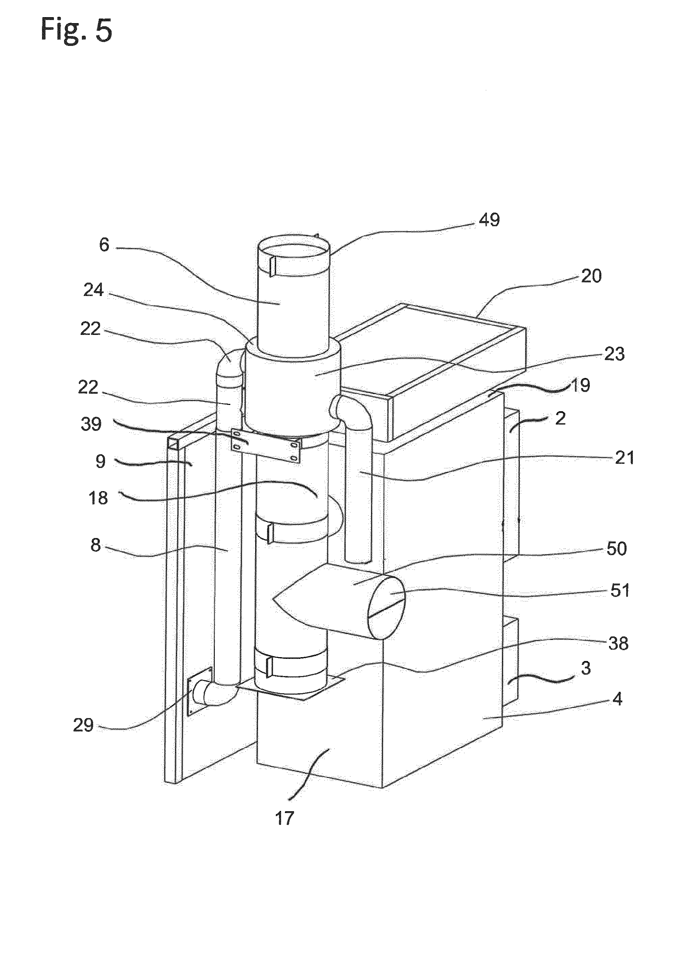

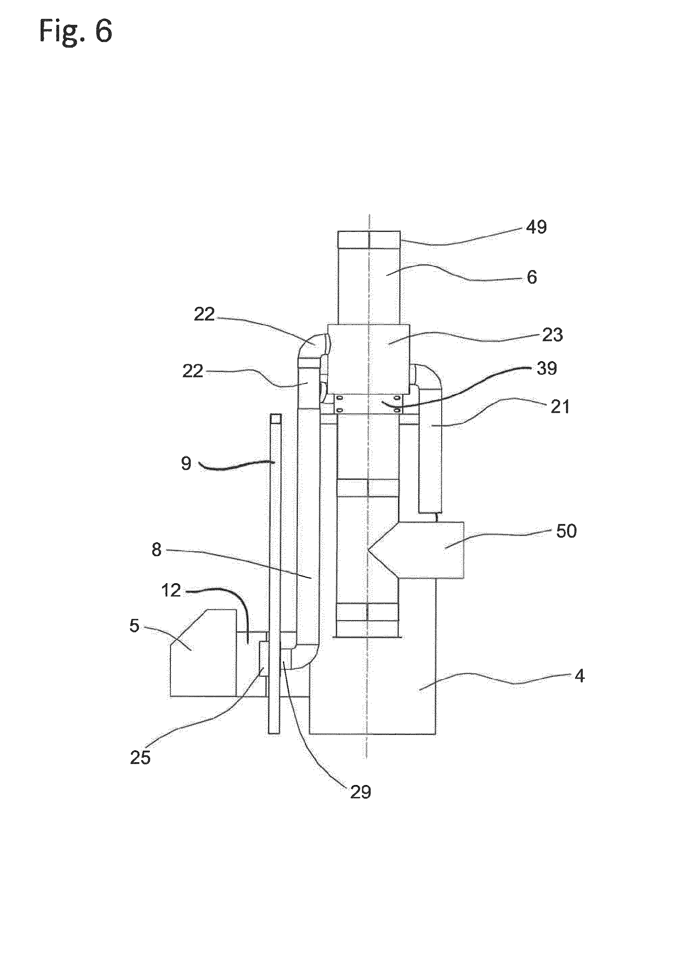

In einer bevorzugten Ausführungsform weist eine Heizanlage 1 für den Betrieb im Freien eine kombinierte Brennkammer 4, einen Brenner 5, einen Anzünder (nicht dargestellt), einen Kamin 6, einen Pellettank 7 und/oder ein Holzdepot (nicht dargestellt) und eine Lufteinleiteinrichtung 8 auf (Fig. 1 bis 8).

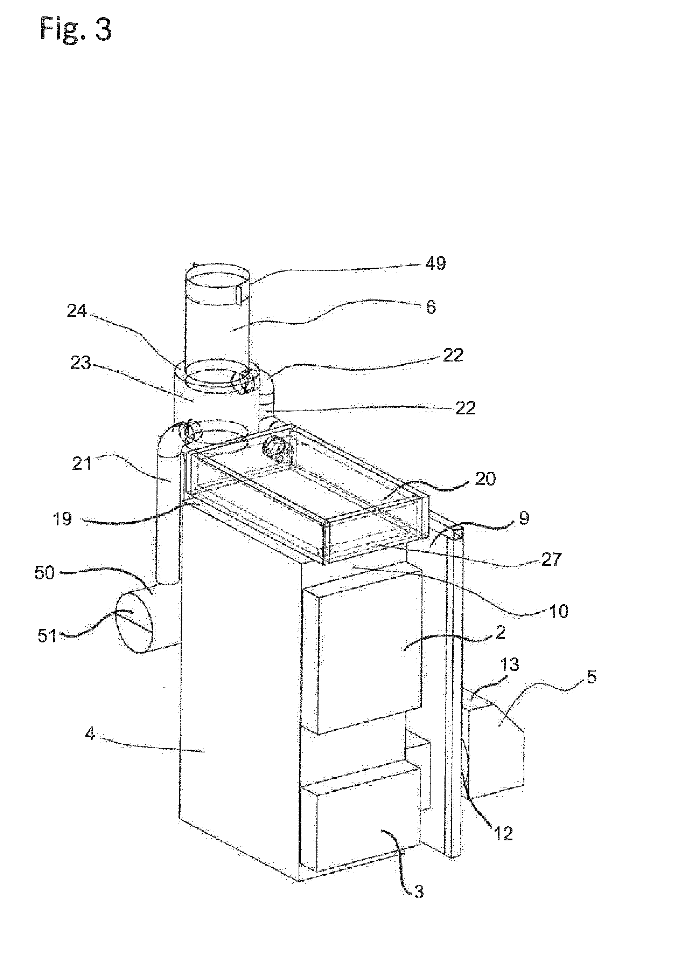

Die Brennkammer 4 ist zum Verbrennen von Pellets und/oder Holz als Brennstoff ausgebildet. In der vorliegenden Ausführungsform sind an einer Vorderseite 10 der Brennkammer 4 eine Brennkammertür 2 und eine Aschenlade 3 vorgesehen (Fig. 3). Vorzugsweise ist die Brennkammertür 2 oberhalb der Aschenlade 3 angeordnet (Fig. 3). In einem geschlossenen Zustand bedeckt die Aschenlade 3 eine Aschenschublade und ein Lüftungsgitter (nicht dargestellt).

An einer rechten Seite 11 der Brennkammer 4 ist ein Brenner 5 vorgesehen. Der Brenner 5 ist über ein Rohr 12 mit der Brennkammer 4 verbunden. An einer Oberseite 13 des Brenners 5 ist eine Öffnung 14 vorgesehen (Fig. 1). In der Öffnung 14 ist ein Rohr 15 angebracht. Dieses Rohr 15 verbindet den Brenner 5 mit einem Schneckenantrieb 16 (Fig. 1). Zur Beförderung der Pellets aus dem Pellettank 7 in den Brenner 5 und weiter in die Brennkammer 4 ist der Schneckenantrieb 16 mit dem Pellettank 7 verbunden. Eine Trennwand 9 ist als Isolierung zwischen der Brennkammer 4 und dem Pellettank 7 angebracht.

Der Kamin 6 ist an einer Rückseite 17 der Brennkammer 4 angebracht. Um die bei der Verbrennung der Pellets und/oder des Holzes entstehenden Abgase aus der Brennkammer 4 abzuführen, ist der Kamin 6 über eine Öffnung 18 kommunizierend mit der Brennkammer 4 verbunden. Der Kamin 6 weist mehrere Verbindungsmanschetten 49 und ein Rohrstück 50 auf, wobei an dem Rohrstück 50 ist eine Zug- und Explosionsklappe 51 angebracht. Der Kamin 6 ist aus einem Innenrohr und einem Außenrohr ausgebildet, wobei sich zwischen dem Innenrohr und dem Außenrohr eine Isolierung befindet.

Zum Zuführen von Frischluft zum Brenner 5 weist die erfindungsgemäße Heizanlage 1 einen Lüftungsschacht auf. Ein Teil 20 des Lüftungsschacht ist an einer Oberseite 19 der Brennkammer 4 angeordnet und mit der Brennkammer 4 thermisch gekoppelt ist. Der Teil 20 des Lüftungsschachts besitzt einen Einlass 27 (Figur 3), durch welchen Frischluft in den Lüftungsschacht gelangen kann. An der zum Einlass 27 diametral gegenüberliegenden Seite ist der Lüftungsschacht mit einem Rohr 22 verbunden.

Das Rohr 22 ist als T-Stück ausgebildet und einerseits mit einer Manschette 23 und andererseits mit einem Lufteinleitrohr 8 verbunden. Die Manschette 23 umschließt das Innenrohr des Kamins 6. Sie ist mit ihrem oberen und unteren Rand jeweils mit Ringstegen 24 gegenüber dem Kamin 6 abgedichtet. Zudem kann die Manschette 23 außenseitig mit einer Isolationsschicht versehen sein. Der die Manschette 24 aufweisende Kaminabschnitt ist vorzugsweise als einteiliges Segment ausgebildet, das das Innenrohr, die Manschette 23 und ein Außenrohrsegment aufweist, wobei sich zwischen dem Außenrohrsegment und der Manschette 23 eine Isolierung befindet.

Die Manschette 23 bildet somit einen sich um den Kamin 6 herum erstreckenden Hohlraum. Ein Frischluftrohr 21 ist an der zum Rohr 22 diametral gegenüberliegenden Seite der Manschette 23 kommunizierend mit dieser angeschlossen. Das Frischluftrohr 21 erstreckt sich ein Stück nach unten. Da sich im unteren Bereich die kühlere Luft befindet, die durch das Frischluftrohr 21 angesogen und zur Manschette 23 geführt werden kann, ist dies zweckmäßig. Die Frischluft wird in der Manschette 23 erwärmt. Die Manschette 23 bildet somit einen Wärmetauscher, mit dem die eingeleitete Frischluft erwärmt und die durch den Kamin 6 abgeführten Abgase gekühlt werden.

Der Teil 20 des Lüftungsschachtes bildet gleichermaßen einen Wärmetauscher mit der Brennkammer 4, wobei die an der Oberseite 19 von der Brennkammer 4 abgegebene Wärme von der durch den Teil 20 des Lüftungsschachts strömende Frischluft aufgenommen wird. Diese Frischluft wird somit vorgewärmt. Am T-förmigen Rohrstück 22 wird die aus dem Teil 20 des Lüftungsschachts und der Manschette 23 vorgewärmte Frischluft zusammengeführt und durch das Lufteinleitrohr 8 nach unten und zum Brenner 5 geleitet. Dem Brenner 5 wird somit vorgewärmte Frischluft zugeführt.

In diesem Zusammenhang ist von Vorteil, dass der Einlass 27 des Lüftungsschachts 20 oberhalb bzw. am oberen Bereich der Brennkammer 4 angeordnet ist. Dies ist insbesondere vorteilhaft, wenn ein Gehäuse 28 um die Brennkammer 4 vorgesehen ist, da sich dann die durch die Abwärme der Brennkammer 4 erhitzte Luft in dem oberen Bereich des Gehäuses 28 ansammelt und von dem Teil 20 des Lüftungsschachtes angesaugt wird.

Vorzugsweise werden in der Heizanlage 1 beide Wärmetauscher, Lüftungsschacht 20 und Manschette 23, vorgesehen. Im Rahmen der Erfindung ist es jedoch auch möglich, lediglich einen einzigen der beiden Wärmetauscher vorzusehen.

Die Manschette 23 dient nicht nur der Erwärmung der eingeleiteten Frischluft, sondern auch der Abkühlung der im Kamin 6 geführten Abgase. Die Abgase werden durch das Abkühlen der Abgase mittels der Manschette 23 vor allem am Umfangsbereich des Kamins 6 abgekühlt. Dadurch bildet sich im Randbereich des Kamins 6 eine langsamere Strömungsgeschwindigkeit und im Zentrum des Kamins 6, in dem die Abgase heißer sind, eine höhere Strömungsgeschwindigkeit aus. Insgesamt wird so ein stärkerer Luftzug erzielt, da der Luftzug des Kamins 6 durch die höheren Strömungsgeschwindigkeiten verstärkt wird. Mit der Manschette 23 können die Abgase um 20 bis 25 °C gekühlt werden. Das Zugverhältnis wird bei einem Kamindurchmesser von circa 100 bis 200 mm etwa um 4 Pa gesteigert.
Um der Brennkammer 4 die für die Verbrennung benötigte Frischluft zuzuführen, koppelt das Lufteinleitrohr 8 den Lüftungsschacht mit dem Brenner 5. Die Lufteinleiteinrichtung 8 umfasst ein Gebläse 25. Dieses Gebläse 25 ist mit einer Flanschverbindung 29 an der Trennwand 9 angebracht. Vorzugsweise führt das Rohr der Lufteinleiteinrichtung 8 von dem Lüftungsschacht durch die Trennwand 9 hindurch über das Gebläse 25 zu dem Brenner 5.

Der Anzünder ist in der Brennkammer 4 vorgesehen (nicht dargestellt). In der Brennkammer 4 sind weiterhin der Teller, auf dem die Pellets angeordnet werden können, und der Rost, auf dem das Holz in der Brennkammer 4 manuell angeordnet werden kann, vorgesehen (nicht dargestellt).

In der Heizanlage 1 werden in einem geschlossenen Kreislauf ein Wärmeträger geführt. In der vorliegenden Ausführungsform ist der Wärmeträger ein Gemisch aus Wasser und Frostschutzmittel. Das Frostschutzmittel hindert das Wasser in den Wintermonaten am Gefrieren in den im Freien angeordneten Leitungen. Der geschlossene Kreislauf ist mit einem Wärmetauscher (nicht dargestellt) an die Brennkammer 4 gekoppelt. Der Teller, auf dem die Pellets angeordnet werden können, weist zumindest einen mit dem Kreislauf für den Wärmeträger gekoppelten Kanal auf. Das Wasser wird an dem Teller vorbeigeleitet, sodass der Teller durch das Wasser gekühlt wird.

Als Brennstoff für die Verbrennung wird entweder Pellets, Holz oder Pellets und Holz verwendet. Die Pellets werden in der Brennkammer 4 mit dem Anzünder angezündet. Das Holz wird in der Brennkammer 4 entweder von den Pellets oder von dem Anzünder entzündet. Das Wasser wird in dem Kanal, der mit dem Teller gekoppelt ist, vorbeigeleitet (nicht dargestellt), bevor es in dem Wärmetauscher des geschlossenen Kreislaufes in der Brennkammer 4 erhitzt wird. So kühlt das Wasser den Teller, während die Pellets auf dem Teller brennen. Die Wärme, die dem Brennen der Pellets entsteht, wird zum Teil über den Teller abgeführt. Eine übermäßige Entwicklung von Staub während des Brennens kann aufgrund der Kühlung des Tellers vermieden werden.

Das Wasser in dem geschlossenen Kreislauf wird von der bei der Verbrennung in der Brennkammer 4 entstehenden Wärme erhitzt. Die Brennkammer 4 strahlt einen Teil der bei der Verbrennung entstehenden Wärme, die nicht von dem Wasser in dem geschlossenen Kreislauf aufgenommen wird, an ihre Umgebung ab. Dadurch wird die Frischluft außerhalb der Brennkammer 4 erwärmt.

Bei dem oben erläuterten Ausführungsbeispiel ist ein Gebläse 25 vorgesehen. Die Heizanlage 1 kann bei optimaler Einstellung des Zuges im Kamin 6 auch ohne Gebläse 25 ausgebildet sein. Zweckmäßig ist es hierbei jedenfalls, eine Kühlung des Kamins 6 vorzusehen, wie es durch die Manschette 23 im vorliegenden Ausführungsbeispiel realisiert ist.

Mit der erfindungsgemäßen Wärmerückführung kann der Verbrennungsvorgang einer Heizanlage 1 verbessert werden. Eine Erhöhung des Wirkungsgrads einer erfindungsgemäßen Heizanlage 1 kann daher zudem erzielt werden. Durch die Anordnung und den Betrieb der Heizanlage 1 im Freien ist es weiterhin möglich, die Pellets und das Holz im Freien zu lagern, was in dem Gebäude erheblich Platz einspart. So bleiben auch Schmutz und Staub beim Nachlegen von Pellets und/oder Holz und deren anschließender Verbrennung sowie die bei dem Verbrennungsvorgang entstehenden Gase im Freien und können in dem Gebäude vermieden werden.

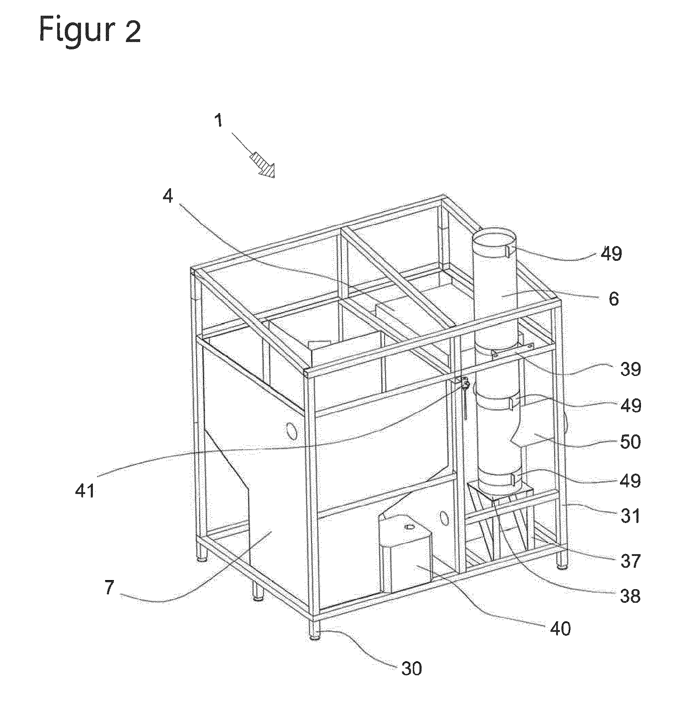

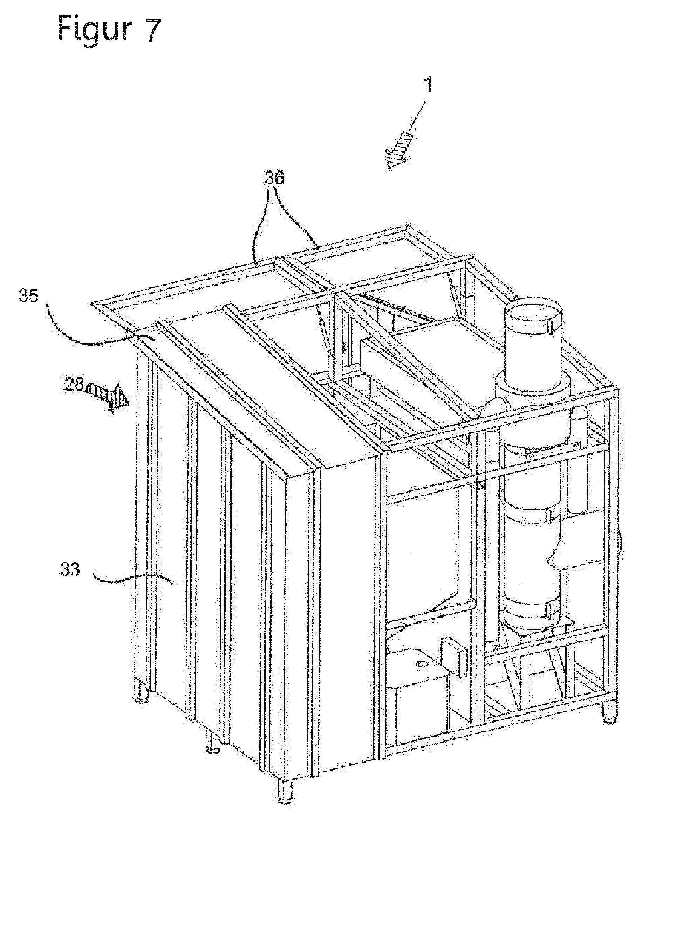

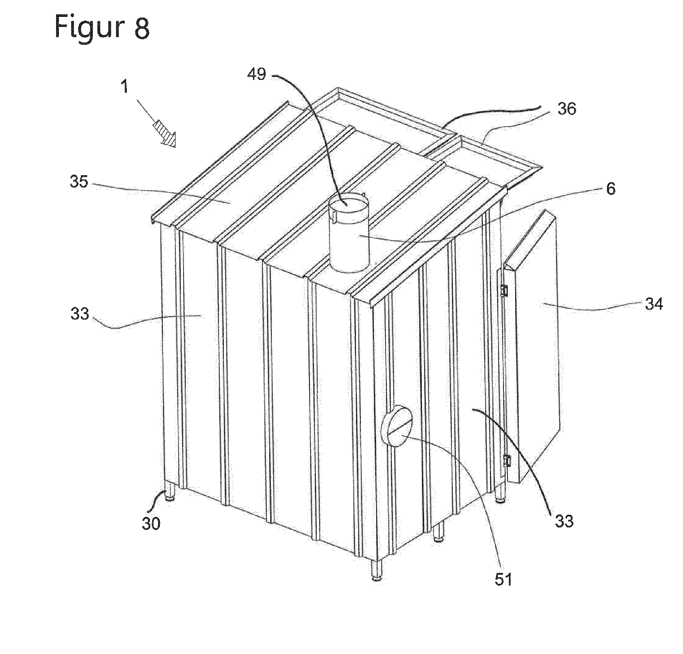

Die Heizanlage 1 weist ein Gehäuse 28 auf, das die Brennkammer 4 umschließt (Fig. 1 und 2 sowie 7 und 8). Die Heizanlage 1 kann im Freien angeordnet sein kann, da das Gehäuse 28 die Brennkammer 4 und die damit verbundenen Einrichtungen vor den Umwelteinflüssen schützt. Das Gehäuse 28 weist verstellbare Stellfüße 30 auf und umfasst in der vorliegenden Ausführungsform eine Gerüstkonstruktion 31. Die Gerüstkonstruktion 31 ist mit einer Seitenwandverkleidung 33, einer Tür 34, einem Dach 35 und zwei Serviceöffnungen 36 verkleidet (Fig. 7 und 8).
Die Serviceöffnungen 36 dienen als Kontrollluken und können klappbar nach oben geöffnet werden. Die Zugänglichkeit des Inneren der Heizanlage 1 wird mit der Tür 34 gewährleistet. Die Brennkammertür 2 und die Aschenlade 3 können nur dann geöffnet werden, wenn die Tür 34 geöffnet ist. Ein Stellfuß 37 ist an der Gerüstkonstruktion 31 vorgesehen. Dieser Stellfuß 37 umfasst eine Abstützplatte 38, auf der der Kamin 6 angebracht und über eine Wandhalterung 39 an der Gerüstkonstruktion 31 sicher befestigt ist (Fig. 2 und 7).

Ein Zwischenraum, in dem sich Frischluft befindet, ist zwischen der Brennkammer 4 und dem Gehäuse 28 ausgebildet (nicht dargestellt). Während des Verbrennungsvorgangs wird diese Frischluft von der Wärmestrahlung der Brennkammer 4 erwärmt. Der Lüftungsschacht mündet in den Zwischenraum zwischen dem Gehäuse 28 und der Brennkammer 4, sodass die im Zwischenraum befindliche erwärmte Luft über das Rohr 21 des Lüftungsschachts bzw. den Teil 20 des Lüftungsschachts angesaugt wird. Durch das Ansaugen der vorgewärmten Frischluft aus seinem Inneren wird das Gehäuse 28 abgekühlt, da von außerhalb des Gehäuses 28 kühlere Frischluft in das Innere des Gehäuses 28 eindringen kann.

In der vorliegenden Ausführungsform weist das Gehäuse 28 in einem unteren Bereich Öffnungen auf (nicht dargestellt) und ist oberhalb dieser Öffnungenabgedichtet. Vorzugsweise sind die Öffnungen in der Doppeltür 34 angebracht. Durch diese Öffnungen kann kühle Frischluft von außerhalb des Gehäuses 28 in sein Inneres dringen. Das Gehäuse 28 ist von den Öffnungen nach oben hin im Wesentlichen dicht, sodass die von der Wärmestrahlung der Brennkammer 4 erwärmte Luft kaum aus dem Gehäuse 28 entweichen und so keine Wärmeenergie verloren gehen kann. Vorzugsweise ist der die Öffnungen aufweisende Bereich benachbart zu einer Vorderseite einer Aschenlade 3 der Brennkammer 4 angeordnet, sodass die von außerhalb des Gehäuses 28 angesaugte Luft zunächst entlang der Aschenlade 3 zur Rückseite 17 der Brennkammer 4 strömt und von dort entlang der Rückseite 17 und entlang einem Kamin 6 nach oben strömt.

Ein Katalysator ist zum Reinigen des Abgases vorgesehen (nicht dargestellt). Der Katalysator ist nicht geregelt. Aufgrund des gekühlten Tellers und des geringeren Staubaufkommens ist kein mit einer Lambda-Sonde geregelter Katalysator notwendig. Die Elektronik in der Heizanlage 1 kann so einfach ausgebildet sein. Daher können eventuell anfallende Wartungsarbeiten von dem Besitzer selbst durchgeführt werden. Das Beauftragen eines auf die Heizanlage 1 spezialisierten Technikers mit der Wartung ist nicht notwendig.

Der geschlossene Kreislauf ist aus Leitungen zum Führen des Wassers mit einem Druck von zumindest 1,8 bar bis 3,0 bar ausgebildet. Um in einem zu beheizenden Gebäude einen Höhenunterschied von einigen Metern, vorzugsweise zumindest drei Meter, überwinden zu können, wird das Wasser mit einem Druck beaufschlagt. So kann erreicht werden, dass auch höhere Stockwerke direkt beheizt werden können und nicht nur das Stockwerk, das sich auf derselben Ebene wie die Heizanlage 1 befindet. Dazu ist eine Druckeinrichtung vorgesehen. In der vorliegenden Ausführungsform ist die Druckeinrichtung eine Pumpe (nicht dargestellt), die das Wasser unter Druck setzt. Zum Feststellen des Drucks des Wassers ist ein Manometer vorgesehen (nicht dargestellt). Die Pumpe setzt das Wasser solange unter Druck, bis der notwendige Druck erreicht ist, sollte der mit dem Manometer festgestellte Druck des Wassers niedriger als 1,8 bar sein.

Der Wärmekreislauf weist in der vorliegenden Ausführungsform ein Überdruckventil auf (nicht dargestellt). Um Schäden an der Heizanlage 1 zu verhindern, ist das Überdruckventil derart ausgebildet, dass es bei einem Schwellenwert von 1,8 bar bis 3,0 bar öffnet. Wenn sich das Wasser ausdehnt, weil beispielsweise kein Abnehmer für die mit dem Wasser transportierte Wärme vorhanden ist, dann findet ein Überschreiten des Drucks in dem Wasser statt. Dies ist beispielsweise dann der Fall, wenn die Heizung in dem Gebäude ausgeschaltet ist. Um das Wasser aufzunehmen, ist vorzugsweise benachbart zu dem Überdruckventil ein Überlauftank 40 angeordnet. Der Überlauftank hat beispielsweise ein Fassungsvermögen von in etwa 25 Liter bis 35 Liter. Dehnt sich das Wasser aus, weil es aufgrund eines fehlenden Abnehmers zu heiß wird und beispielsweise 110°C überschreitet, öffnet sich das Überdruckventil und das überschüssige Wasser fließt anschließend in den Überlauftank 40.

Zusätzlich kann eine automatische Kaltwassereinspeisung 41 vorgesehen sein, mit der bei einer Überhitzung des Wärmeträgers und/oder bei zu hohem Druck des Wärmeträgers kaltes Frischwasser in den Wärmekreislauf eingespeist wird. Dadurch kann die Temperatur des Wärmeträgers abgesenkt werden. Überschüssiges Wasser kann bei dem Überdruckventil austreten und in den Überlauftank 40 ablaufen.

In den aus dem Stand der Technik bekannten drucklosen Heizanlagen fließt der Wärmeträger üblicherweise in die Umgebung ab. Das Abfließen in die Umgebung bei Überdruck wirkt sich negativ auf die Umwelt aus, ist der erfindungsgemäße Wärmeträger ein Gemisch aus Wasser und Frostschutzmittel. Mit einem Überlauftank 40 kann dies vermieden werden.

An den geschlossenen Kreislauf des Wärmeträgers kann zumindest ein Wärmetauscher in einem Gebäude gekoppelt werden. Der erhitzte Wärmeträger wird zu dem Gebäude geleitet und gibt die bei der Verbrennung aufgenommene Wärme bei dem Wärmetauscher an das Wasser einer Heizung ab. Das Gebäude wird beheizt. Es ist möglich, den Wärmetauscher in dem Gebäude in einem höheren Stockwerk anzuordnen, da der Wärmeträger mit einem Druck beaufschlagt ist. Der Druck in dem Wärmeträger ermöglicht es, eine Höhe von zumindest drei Metern zu überwinden. Um jeweils einem Verbraucher Wärme zuzuführen, sind vorzugsweise mehrere Wärmetauscher an den Wärmekreislauf gekoppelt. Es ist demnach nicht notwendig, einen Verteilungskreislauf vorzusehen, der die einmal zu dem Gebäude transportierte Wärme an verschiedene Parteien in einem Gebäude, insbesondere in einem Wohn- oder Bürogebäude, verteilt. Jede Partei kann als separater Abnehmer mit einem entsprechenden eigenen Wärmetauscher direkt den erhitzen Wärmeträger von der Heizanlage empfangen.

**Bezugszeichenliste**

| | | | |
|---|---|---|---|
| 1 | Heizanlage | 23 | Manschette |
| 2 | Brennkammertür | 24 | Ringstege |
| 3 | Aschenlade | 25 | Gebläse |
| 4 | Brennkammer | | |
| 5 | Brenner | 27 | Einlass |
| 6 | Kamin | 28 | Gehäuse |
| 7 | Pellettank | 29 | Flanschverbindung |
| 8 | Lufteinleitrohr | 30 | Verstellbarer Stellfuß |
| 9 | Trennwand | 31 | Gerüstkonstruktion |
| 10 | Vorderseite | | |
| 11 | Rechte Seite | 33 | Seitenwandverkleidung |
| 12 | Rohr | 34 | Tür |
| 13 | Oberseite | 35 | Dach |
| 14 | Öffnung | 36 | Serviceöffnung |
| 15 | Rohr | 37 | Stellfuß |
| 16 | Schneckenantrieb | 38 | Abstützplatte |
| 17 | Rückseite | 39 | Wandhalterung |
| 18 | Öffnung | 40 | Überlauftank |
| 19 | Oberseite | 41 | Kaltwassereinspeisung |
| 20 | Teil des Lüftungsschachts | 49 | Verbindungsmanschette |
| 21 | Frischluftrohr | 50 | Rohrstück |
| 22 | Rohr | 51 | Zug- und Explosionsklappe |

## Patentansprüche

1. Heizanlage für den Betrieb im Freien mit
einer kombinierten Brennkammer (4) zum Verbrennen von Pellets und/oder Holz, einem Anzünder zum Befeuern der Pellets und/oder des Holzes,
einem kommunizierend mit der Brennkammer (4) verbundenen Kamin (6) zum Abführen der bei der Verbrennung erzeugten Abgase,
einem Pellettank (7) und/oder einem Holzdepot zur Lagerung der Pellets und/oder des Holzes, und
einer Lufteinleiteinrichtung (8) zum Einleiten von Frischluft in die Brennkammer (4), **dadurch gekennzeichnet, dass**
ein thermisch an die Brennkammer (4) gekoppelter Lüftungsschacht mit der Lufteinleiteinrichtung (8) verbunden ist, sodass vorgewärmte Frischluft in die Brennkammer (4) eingeleitet wird, wobei ein Teil (20) des Lüftungsschachts an einer Oberseite (19) der Brennkammer (4) vorgesehen ist, und dass ein Gehäuse (28) vorgesehen ist, das die Brennkammer (4) umschließt, wobei zwischen der Brennkammer (4) und dem Gehäuse (28) ein Zwischenraum ausgebildet ist und wobei der Lüftungsschacht in diesen Zwischenraum mündet, sodass die im Zwischenraum befindliche Luft vom Lüftungsschacht angesaugt wird.

2. Heizanlage nach Anspruch 1,
**gekennzeichnet dadurch, dass**
die Lufteinleiteinrichtung (8) ein Gebläse (25) zum Einleiten der vorgewärmten Frischluft in die Brennkammer (4) aufweist.

3. Heizanlage nach Anspruch 1 oder 2,
**dadurch gekennzeichnet, dass**
der Lüftungsschacht mit einem Einlass (27) zum Ansaugen von Luft oberhalb der Brennkammer (4) mündet.

4. Heizanlage nach einem der Ansprüche 1 bis 3,
**dadurch gekennzeichnet, dass**
in einem unteren Bereich des Gehäuses (28) Öffnungen vorgesehen sind und das Gehäuse (28) oberhalb dieser Öffnungen im Wesentlichen dicht ist, wobei der die Öffnungen aufweisende Bereich vorzugsweise benachbart zu einer Vorderseite einer Aschenlade (3) der Brennkammer (4) angeordnet ist, so dass die von außerhalb des Gehäuses (28) angesaugte Luft zunächst entlang der Aschenlade (3) zur Rückseite (17) der Brennkammer (4) strömt und von dort entlang der Rückseite (17) und entlang dem Kamin (6) nach oben strömt.

5. Heizanlage für den Betrieb im Freien, insbesondere nach einem der Ansprüche 1 bis 4, mit
einer kombinierten Brennkammer (4) zum Verbrennen von Pellets und/oder Holz, einem Anzünder zum Befeuern der Pellets und/oder des Holzes,
einem kommunizierend mit der Brennkammer (4) verbundenen Kamin (6) zum Abführen der bei der Verbrennung erzeugten Abgase,
einem Pellettank (7) und/oder einem Holzdepot zur Lagerung der Pellets und/oder des Holzes, und
einer Lufteinleiteinrichtung (8) zum Einleiten von Frischluft in die Brennkammer (4), **dadurch gekennzeichnet, dass**
die Lufteinleiteinrichtung (8) einen mit dem Kamin (6) thermisch gekoppelten Abschnitt (23) aufweist.

6. Heizanlage nach Anspruch 5,
**dadurch gekennzeichnet, dass**
der thermisch mit dem Kamin (6) gekoppelte Abschnitt des Lüftungsschachts zumindest als ein Rohr (22) und/oder als eine Manschette (23) ausgebildet ist, wobei das Rohr (22) und/oder die Manschette (23) um den Kamin (6) herum oder durch den Kamin (6) zu einem Brenner (5) geführt ist.

7. Heizanlage nach einem der Ansprüche 1 bis 6,
**dadurch gekennzeichnet, dass**
ein Teller vorgesehen ist, auf welchem die zu verbrennenden Pellets angeordnet werden können, wobei der Teller zumindest einen mit einem Kreislauf für einen Wärmeträger gekoppelten Kanal aufweist, sodass der Teller durch den Wärmeträger gekühlt wird.

8. Heizanlage nach einem der Ansprüche 1 bis 7,
**dadurch gekennzeichnet, dass**
ein Rost vorgesehen ist, auf welchem das zu verbrennende Holz angeordnet ist.

9. Heizanlage nach einem der Ansprüche 1 bis 8,
**dadurch gekennzeichnet, dass**
ein Wärmetauscher vorgesehen ist, welcher an einen Kreislauf mit einem flüssigen Wärmeträger gekoppelt ist.

10. Heizanlage nach Anspruch 9,
**dadurch gekennzeichnet, dass**
der Wärmeträger ein Gemisch aus Wasser und Frostschutzmittel ist.

11. Heizanlage nach einem der Ansprüche 1 bis 10,
**dadurch gekennzeichnet, dass**
ein Katalysator zum Reinigen des Abgases vorgesehen ist.

12. Heizanlage für den Betrieb im Freien, insbesondere nach einem der Ansprüche 1 bis 11, mit
einer kombinierten Brennkammer (4) zum Verbrennen von Pellets und/oder Holz, einem mit der Brennkammer (4) gekoppelten Wärmetauscher,
einem geschlossenen Wärmekreislauf, in dem ein flüssiger Wärmeträger geführt werden kann, wobei der Kreislauf aus Leitungen zum Führen des Wärmeträgers mit einem Druck von zumindest 1,8 bar bis 3,0 bar ausgebildet ist.

13. Heizanlage nach Anspruch 12,
**dadurch gekennzeichnet, dass**
ein Manometer zum Feststellen eines Drucks des Wärmeträgers vorgesehen ist, wobei eine Druckeinrichtung zum Beaufschlagen des Wärmeträgers mit einem Druck vorgesehen ist, wobei
die Druckeinrichtung vorzugsweise zumindest eine Pumpe aufweist, um den Wärmeträger unter Druck zu setzen.

14. Heizanlage nach Anspruch 12 oder 13,
**dadurch gekennzeichnet, dass**
die Heizanlage (1) ein Überdruckventil aufweist, wobei vorzugsweise benachbart zum Überdruckventil ein Überlauftank (40) angeordnet ist, um den Wärmeträger aufzunehmen, und
das Überdruckventil derart ausgebildet sein kann, dass es bei einem Schwellenwert von 1,8 bar bis 3,0 bar öffnet.

15. Heizanlage nach Anspruch 12 bis 14,
**dadurch gekennzeichnet, dass**
an den geschlossenen Kreislauf des Wärmeträgers zumindest ein Wärmetauscher in einem Gebäude gekoppelt werden kann, und/oder
an den Wärmekreislauf mehrere Wärmetauscher gekoppelt sind, um jeweils einem Verbraucher Wärme zuzuführen.
